# EUROPEAN PATENT SPECIFICATION

(11) **EP 3 839 744 B1**
(45) Date of publication and mention of the grant of the patent: **19.01.2022**
(21) Application number: 19217260.9
(22) Date of filing: 17.12.2019
(51) Int. Cl.: G06F 11/36

(54) **COMPUTER-IMPLEMENTED METHOD OF PREDICTING TESTCASE STATUS**
COMPUTERIMPLEMENTIERTES VERFAHREN ZUR VORHERSAGE DES STATUS EINES TESTFALLS
MÉTHODE MISE EN UVRE PAR ORDINATEUR POUR PRÉDIRE L'ÉTAT D'UN CAS D'ESSAI

(43) Date of publication of application: 23.06.2021
(73) Proprietor: Codemanufaktur GmbH, 91052 Erlangen (DE)
(72) Inventor: Matousek, Vit, 91056 Erlangen (DE); Endler, Gregor Berthold, 91052 Erlangen (DE); Geyer, Klaus, 91054 Erlangen (DE)
(74) Representative: Meyer zu Bexten, Elmar

(56) References cited:
- US-A1- 2019 087 311
- US-B1- 9 514 037
- ANDERSON JEFF ET AL: "Striving for Failure: An Industrial Case Study about Test Failure Prediction", 2015 IEEE/ACM 37TH IEEE INTERNATIONAL CONFERENCE ON SOFTWARE ENGINEERING, IEEE, vol. 2, 16 May 2015 (2015-05-16), pages 49-58, XP033195048, DOI: 10.1109/ICSE.2015.134 [retrieved on 2015-08-14]

## Description

### Technical Field

The invention pertains to the process and products as per the first portion of the independent claims.

### Background Art

In computer software engineering, by revision control, sometimes referred to as version control or source control, is meant any kind of practice that tracks and provides control over modifications to source code in a so-called repository or depot. In that context, such modification is known as a change, diff, or delta, the required granularity of the modification to be considered a change varying between version control systems. Herein, the act as well as the result of writing changes to or merging them with the repository is called a commit, check-in, install, submit, or record. In advanced version control systems with atomic multi-change commits, the set of changes made in a single commit - corresponding to the list of differences between two successive versions in the repository - is referred to as a changeset, change set, cset, change list, update, or patch. Usually, a set of files under version control may be "branched" or "forked" at any point in time such that, from that time forward, two copies of those files may develop at different speeds or in different ways independently of each other.

Being an established practice within the software engineering discipline known as software configuration management (SCM), version control plays a vital role in so-called defect tracking, that is, ensuring that every defect may be traced back to its source. By way of example, PTL1 discloses an early attempt at defect tracking by means of version control; PTL2 discusses a regression test strategy based on changes committed to a source code repository; PTL3, PTL4, and NPL1 each disclose the subject matter of the pre-characterizing portion of Claim 1 More in particular, PTL3 discloses a method of machine learning based ranking of test cases for software development. PTL4 discloses a method for test program scheduling by setting a test schedule based on identification of predictable test data sets and dynamic test data sets associated with a test program and executing the test program based on the test schedule. NPL1 discloses a method for performing software testing using regression testing.

### Summary of invention

The invention, which is defined in detail in the appended independent claims, is hereinafter disclosed in such a way that the technical problem with which it deals can be appreciated and the solution can be understood.

### Technical Problem

Software testing is an important yet costly part of state-of-the-art software projects. Prior-art statistical or machine learning (ML) approaches as disclosed, for instance, in NPL1, allow for some reduction in test effort by indicating - before their execution - those test cases in a test suite which are likely to fail. Still, test execution ties up a significant part of development resources. The invention aims to free or optimize use of these resources.

### Solution to Problem

The problem is solved as per the second portion of the independent claims. Contrary to the teaching of NPL1, this approach assesses the likely impact of individual changesets, rather than aggregating across all changesets. For feature extraction, a changeset and the files affected thereby may be condensed into metadata.

### Advantageous effect of invention

The invention enables a refined consideration of the possible effects a specific change may induce, all the while still allowing the emulation of a nonspecific classifier - such as described in NPL1 - if desired. Hence, the invention provides greater flexibility and versatility.

### Brief description of drawings

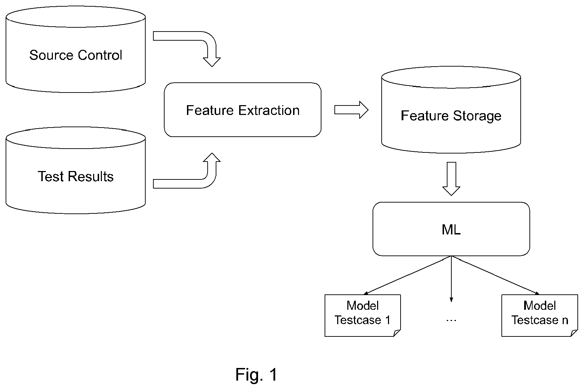

Figure 1 illustrates a high-level architecture of the invention.

### Description of embodiments

To obtain essential training data, sources used in any major software project are utilized. These are version control, test management, and defect management systems. Those tools provide access to a complete history of code revisions based on committed files and any dependencies of individual software components, a complete history of testcases along with their execution times and results, including the software version on which the test was performed, and a complete history of documented errors encountered therein.

In mining these data, consideration is given to successive executions of a test case to relate their results to coinciding code changes. Hereinafter, the status of the test case is considered a binary attribute whose value is expressed as either "pass" or "fail". Hence, given two executions of that testcase on different revisions of any software project, there exist four possible combinations of the statuses established upon the first execution and the second execution: "pass"/"fail", "fail"/"pass", "fail"/"fail", and "pass"/ "pass". Within the context of this document, all four combinations will be considered "transitions" in status between the two executions.

As the skilled artisan will readily appreciate, an embodiment may easily be extended to cover further testcase statuses such as "blocked", "aborted", "inapplicable", et cetera, without departing from the scope of the invention.

Per the invention, for each pair of successive - that is, chronologically adjacent - executions of the testcase at hand, any changeset committed therebetween is localized in the repository and its metadata retrieved. This statistical association or, in a broadest sense of the term, "correlation" observed between the changeset and testcase is registered and stored for further processing.

As a practical example, consider a sequence of events wherein, in chronological order: the testcase passed; changesets "A" and "B" were committed to the repository; the testcase failed; changeset "C" was committed; and the testcase still failed. In this case, three correlations might be assumed: first, between "A" and the transition from "pass" to "fail"; second, between "B" and that same transition; and third, between "C" and the transition from "fail" to "fail".

For the purposes of the proposed method, an adequate number of such observations serves as a so-called training dataset for a statistical classifier. Herein, each input or feature vector would describe one of the changesets in terms of its metadata and be labelled with the allegedly correlating transition as an output or supervisory signal. Upon optional data balancing, a classification model such as a decision tree, Bayesian network, random forests, or ensemble of such models is then fitted on the training dataset by way of what is known in the art as supervised learning. This training should be repeated until the model's goodness - for instance, measured in terms of its average predictive performance and a 95 % confidence interval thereof - reaches a predetermined threshold.

Ideally, this supervised learning technique is applied to all the testcases contained in a regression or other test suite for the software under test, thus fitting, for each testcase, a separate model to be employed as a classifier. Once its training is completed, the model for a specific testcase, upon optional cross validation, is employed to predict the status transition expected on committing any specific further changeset to the repository, be it before or after that commit takes place.

For instance, contemplate the scenario of a programmer or other contributor to a software project who has prepared a changeset outside the repository, such as in his or her so-called sandbox environment. That contributor may use an embodiment of the invention to compile a report encompassing the entire test suite, optionally filtering by criteria such as the predicted status of each testcase or reliability of the respective model. Even prior to the actual check-in, such report would alert said contributor to any correlating testcases that could transition from "pass" to "fail", permitting him or her to reconsider the envisaged change.

Alternatively, a report as outlined above could be compiled in response to a commit operation already performed, allowing, for example, a regression test team or script to prioritize the correlating testcases accordingly and save significant test execution time.

### Industrial applicability

The invention is applicable, inter alia, throughout the software industry.

### Citation list

The following documents are cited hereinbefore.

### Patent literature

PTL1: US 3711863 A (HONEYWELL INF SYSTEMS) 16.01.1973
PTL2: US 9983981 B (AMDOCS DEVELOPMENT LTD [CY]) 29.05.2018
PTL3: US 2019087311 A (SALESFORCE COM INC [US]) 21.03.2019
PTL4: US 9514037 B (IBM [US]) 06.12.2016

### Non-patent literature

NPL1: ANDERSON, Jeff, et al. Striving for failure: an industrial case study about test failure prediction. Proceedings of the 37th International Conference on Software Engineering. 2015, vol.2, p.49-58.

## Claims

1. Computer-implemented method of predicting status of a testcase of a software maintained by means of a code repository, comprising,
for each execution of the testcase, logging the status as a multi-valued attribute such as "pass" or "fail",
**characterized in**,
for each two chronologically adjacent executions, retrieving from the repository any changeset committed interjacently and observing correlation between the changeset and transition in status between the two executions, such as from "pass" to "fail", "fail" to "pass", "fail" to "fail", or "pass" to "pass",
based on the observed correlations, building a training dataset from input vectors representing the changesets, each input vector being labelled with the correlating transition,
fitting a statistical classification model on the training dataset, and,
by means of the model, predicting the status transition resulting from committing a given further changeset to the repository.

2. Method of Claim 1 wherein
the testcase is one among multiple testcases in a test suite, for example, a regression test suite, for the software and
a separate instance of the model is fitted and the status is predicted for each of the testcases.

3. Method of Claim 2 wherein
a report encompassing all testcases is compiled and optionally filtered by criteria such as the predicted status of the respective testcase or reliability of the respective model.

4. Method of Claim 2 or Claim 3 wherein
the report is compiled before committing the further changeset such that a committer is alerted to the correlating testcases or
the report is compiled after committing the further changeset such that the correlating testcases are prioritized accordingly.

5. Method of any of the preceding claims wherein
the dataset is balanced prior to the fitting of the model.

6. Method of any of the preceding claims wherein
the model is validated, preferably cross validated, upon fitting.

7. Method of any of the preceding claims wherein
the fitting of the model is repeated until a measure of goodness of the model meets a given threshold.

8. Method of Claim 7 wherein
the measure is based on an average predictive performance of the model and, for example, a 95 % confidence interval of the performance.

9. Method of any of the preceding claims wherein
the model comprises a decision tree, Bayesian network, or random forests.

10. Method of any of the preceding claims wherein
the model takes the form of a machine learning ensemble, for example, based on a majority vote.

11. Method of any of the preceding claims wherein,
upon transition of the testcase from "pass" to "fail", the transition is traced back, for example, to a file, team, location, module, or component affected by the correlating changeset.

12. Method of any of the preceding claims wherein,
for each changeset, the representative input vector comprises metadata on the changeset such as at least one of the following features:
a branch of the software on which the changeset is committed,
a component of the software associated with the changeset,
an indicator whether the changeset requires a merge commit,
preferably anonymized by a hash, an originator of the changeset,
a time, preferably exact to a day, of committing the changeset,
a number of files affected by the changeset,
a number of files created upon committing the changeset,
a ratio of the files created to files modified upon committing the changeset,
a number of different file operations, such as change, delete, or add,
a number of different containers, such as ZIP, JAR, or folder, in the changeset,
a number of modules to which the changeset applies,
a number of branches which the changeset has undergone,
a number of files globally influenced by the changeset,
a number of tests performed on a code revision of the changeset,
a measure, aggregated across all files affected by the changeset, of time passed since the respective file was last changed,
a measure, aggregated across all files affected by the changeset, of frequency at which the respective file is changed, or
a software metric, such as number of source lines, comment density, or
cyclomatic complexity, pertinent to the code affected by the changeset.

13. Data processing apparatus comprising means for carrying out the
method of any of the preceding claims.

14. Computer program comprising instructions which, when the program
is executed by a computer, cause the computer to carry out the method of any of Claim 1 through Claim 12.

15. Data carrier signal carrying the computer program of Claim 14.

## Patentansprüche

1. Computerimplementiertes Verfahren zur Vorhersage des Status eines Testfalls einer Software, die mittels eines Code-Repositorys verwaltet wird, umfassend die Protokollierung des Status für jede Ausführung des Testfalls als mehrwertiges Attribut, wie z. B. "bestanden" oder "fehlgeschlagen",
**gekennzeichnet durch**,
für jeweils zwei zeitlich aufeinander folgende Ausführungen, den Abruf jeglichen zwischenzeitlich eingebrachten Änderungssatzes aus dem Repository und die Untersuchung der Wechselbeziehung zwischen dem Änderungssatz und dem Statusübergang zwischen den beiden Ausführungen, wie z. B. von "bestanden" zu "fehlgeschlagen", "fehlgeschlagen" zu "bestanden", "fehlgeschlagen" zu "fehlgeschlagen" oder "bestanden" zu "bestanden",
die Erstellung eines Trainingsdatensatzes aus Eingangsvektoren, welche die Änderungssätze verkörpern, anhand der beobachteten Wechselbeziehungen, wobei jeder Eingangsvektor mit dem korrelierenden Übergang gelabelt wird,
die Anpassung eines statistischen Klassifizierungsmodells an den Trainingsdatensatz und,
die Vorhersage desjenigen Übergangs mittels des Modells, welcher sich aus dem Einbringen eines bestimmten weiteren Änderungssatzes in das Repository ergibt.

2. Verfahren nach Anspruch 1, wobei
der Testfall einer unter mehreren Testfällen in einer Testsammlung ist, zum Beispiel einer Regressionstestsammlung, für die Software ist und
für jeden der Testfälle eine gesonderte Instanz des Modells angepasst und der Status vorhergesagt wird.

3. Verfahren nach Anspruch 2, wobei
ein sämtliche Testfälle erfassender Bericht erstellt und wahlweise nach Kriterien wie z. B. dem vorhergesagten Status des jeweiligen Testfalls oder der Zuverlässigkeit des jeweiligen Modells gefiltert wird.

4. Verfahren nach Anspruch 2 oder Anspruch 3, wobei
der Bericht vor dem Einbringen des weiteren Änderungssatzes erstellt wird, sodass ein Urheber auf die Wechselbeziehung zwischen den Testfällen hingewiesen wird, oder
der Bericht nach dem Einbringen des weiteren Änderungssatzes erstellt wird, sodass die korrelierenden Testfälle entsprechend priorisiert werden.

5. Methode für einen der vorstehenden Ansprüche, wobei
der Datensatz vor der Anpassung des Modells ausgeglichen wird.

6. Verfahren nach einem der vorstehenden Ansprüche, wobei
das Modell bei der Anpassung validiert, vorzugsweise kreuzvalidiert wird.

7. Verfahren nach einem der vorstehenden Ansprüche, wobei
die Anpassung des Modells wiederholt wird, bis ein Gütemaß des Modells einen bestimmten Schwellenwert erreicht.

8. Verfahren nach Anspruch 7, wobei
das Maß auf einer durchschnittlichen Vorhersageleistung des Modells und zum Beispiel einem 95 %-Konfidenzintervall der Leistung beruht.

9. Verfahren nach einem der vorstehenden Ansprüche, wobei
das Modell einen Entscheidungsbaum, ein Bayessches Netzwerk oder Zufallswälder umfasst.

10. Verfahren nach einem der vorstehenden Ansprüche, wobei
das Modell in Gestalt eines Ensembles zum maschinellen Lernen vorliegt, zum Beispiel anhand einer Mehrheitsentscheidung.

11. Verfahren nach einem der vorstehenden Ansprüche, wobei
beim Übergang des Testfalls von "bestanden" zu "fehlgeschlagen" der Übergang zum Beispiel auf eine Datei, eine Arbeitsgruppe, einen Standort, ein Modul oder eine Komponente zurückverfolgt wird,
welche vom korrelierenden Änderungssatz betroffen ist.

12. Verfahren nach einem der vorstehenden Ansprüche, wobei
für jeden Änderungssatz der diesen verkörpernde Eingangsvektor Metadaten über den Änderungssatz umfasst, wie z. B. mindestens eines der folgenden Merkmale:
einen Entwicklungszweig der Software, in welchen der Änderungssatz eingebracht wird,
eine Komponente der Software, welche mit dem Änderungssatz zusammenhängt,
eine Angabe, ob der Änderungssatz beim Einbringen eine Zusammenführung erfordert,
einen vorzugsweise durch einen Hashwert anonymisierten Urhebers des Änderungssatzes,
einen vorzugsweise tagesgenauen Zeitpunkt, zu welchem der Änderungssatz eingebracht wurde,
eine Anzahl an Dateien, welche vom Änderungssatz betroffen sind,
eine Anzahl an Dateien, welche beim Einbringen des Änderungssatzes erstellt wurden,
ein Zahlenverhältnis der beim Einbringen des Änderungssatzes erzeugten zu geänderten Dateien,
eine Anzahl an unterschiedlichen Dateioperationen, wie z. B. Ändern, Löschen oder Hinzufügen,
eine Anzahl an unterschiedlichen Containern, wie z. B. ZIP, JAR oder Ordner, im Änderungssatz,
eine Anzahl an Modulen, auf welche sich der Änderungssatz auswirkt,
eine Anzahl an Verzweigungen, welche der Änderungssatz erfahren hat,
eine Anzahl an Dateien, welche insgesamt vom Änderungssatz beeinflusst werden,
eine Anzahl an Tests, welche auf einer Code-Überarbeitung des Änderungssatzes durchgeführt wurden,
ein über sämtliche vom Änderungssatz betroffenen Dateien aggregiertes Maß für die Zeit, welche seit der letzten Änderung der jeweiligen Datei verstrichen ist,
ein über sämtliche vom Änderungssatz betroffenen Dateien aggregiertes Maß für die Häufigkeit, mit welcher die jeweilige Datei geändert wurde oder
eine Software-Metrik, wie z. B. die Anzahl an Quelltextzeilen, Kommentardichte oder zyklomatische Komplexität, welche für den vom Änderungssatz betroffenen Code einschlägig ist.

13. Vorrichtung zur Datenverarbeitung, umfassend Mittel zur Ausführung des Verfahrens nach einem der vorstehenden Ansprüche.

14. Computerprogramm, umfassend Befehle, die bei der Ausführung des Programms durch einen Computer diesen veranlassen, das Verfahren nach einem der Ansprüche 1 bis 12 auszuführen.

15. . Datenträgersignal, das das Computerprogramm nach Anspruch 14 überträgt.

## Revendications

1. Méthode mise en œuvre par ordinateur pour prédire l'état d'un cas de test d'un logiciel maintenu au moyen d'un dépôt de code, comprenant,
pour chaque exécution du cas de test, l'enregistrement de l'état sous la forme d'un attribut à valeurs multiples tel que « réussi » ou « échoué »,
caractérisé en,
pour chacune des deux exécutions chronologiquement successives, récupérer du dépôt chaque ensemble des modifications commis entre-temps et observer la corrélation entre l'ensemble des modifications et la transition d'état entre les deux exécutions, telle que de « réussi » à « échoué », « échoué » à « réussi », « échoué » à « échoué » ou « réussi » à « réussi »,
sur la base des corrélations observées, construire une base de données d'apprentissage des vecteurs d'entrée représentant les ensembles de modifications, chaque vecteur d'entrée étant étiqueté avec la transition en corrélation,
adapter un modèle de classification statistique sur la base de données d'apprentissage et,
au moyen du modèle, prédire la transition résultant du commit d'un autre ensemble des modifications donné dans le dépôt.

2. Méthode selon la revendication 1 dans laquelle
le cas de test est l'un des multiples cas de test d'une suite de tests, par exemple, une suite de tests de régression, pour le logiciel et
une instance distincte du modèle est adaptée et l'état est prédit pour chacun des cas de test.

3. Méthode selon la revendication 2 dans laquelle
un rapport englobant tous les cas de test est compilé et éventuellement filtré par des critères tels que l'état prédit du cas de test respectif ou la fiabilité du modèle respectif.

4. Méthode selon la revendication 2 ou revendication 3 dans laquelle
le rapport est compilé avant du commit de l'autre ensemble des modifications, de sorte qu'un committeur est alerté des cas de tests en corrélation ou
le rapport est compilé après le commit de l'autre ensemble des modifications, de sorte que les cas de test en corrélation sont priorisés a l'avenant.

5. Méthode selon l'une des revendications précédentes dans laquelle la base de données est équilibrée avant d'adapter le modèle.

6. Méthode selon l'une des revendications précédentes dans laquelle le modèle est validé, de préférence par validation croisée, après d'être adapté.

7. Méthode selon l'une des revendications précédentes dans laquelle
l'adaptation du modèle est répétée jusqu'à ce qu'une mesure de la qualité du modèle atteigne un seuil donné.

8. Méthode selon la revendication 7 dans laquelle
la mesure est basée sur une performance prédictive moyenne du modèle et, par exemple, sur un intervalle de confiance de 95 % de la performance.

9. Méthode selon l'une des revendications précédentes dans laquelle le modèle comprend un arbre de décision, un réseau bayésien ou des forêts aléatoires.

10. Méthode selon l'une des revendications précédentes dans laquelle
le modèle prend la forme d'un ensemble d'apprentissage machine, par exemple, basé sur un vote majoritaire.

11. Méthode selon l'une des revendications précédentes dans laquelle,
lors de la transition du cas de test de « réussi » à « échoué », la transition est retracée, par exemple, jusqu'à un fichier, une équipe, un emplacement, un module ou un composant affecté par l'ensemble des modifications en corrélation.

12. Méthode selon l'une des revendications précédentes dans laquelle,
pour chaque ensemble des modifications, le vecteur d'entrée représentatif comprend des métadonnées sur l'ensemble des modifications, telles qu'au moins une des caractéristiques suivantes:
une branche du logiciel sur laquelle l'ensemble des modifications est commis,
un composant du logiciel associé à l'ensemble des modifications,
un indicateur si l'ensemble des modifications nécessite un commit de fusion,
de préférence anonymisé par un haché, un auteur de l'ensemble des modifications,
une heure, de préférence exacte à un jour, du commit de l'ensemble des modifications,
un nombre de fichiers affectés par l'ensemble des modifications,
un nombre de fichiers créés lors du commit de l'ensemble des modifications,
un nombre de fichiers créés par rapport aux fichiers modifiés lors du commit de l'ensemble des modifications,
un nombre d'opérations différentes sur les fichiers, telles que la modification, la suppression ou l'ajout,
un nombre de conteneurs différents, tels que ZIP, JAR ou dossier, dans l'ensemble des modifications,
un nombre de modules auxquels l'ensemble des modifications s'applique,
un nombre de branches que l'ensemble des modifications a connu,
un nombre de fichiers globalement influencés par l'ensemble des modifications,
un nombre de tests effectués sur une révision du code de l'ensemble des modifications,
une mesure, agrégée pour tous les fichiers concernés par l'ensemble des modifications, du temps écoulé depuis la dernière modification du fichier respectif,
une mesure, agrégée pour tous les fichiers concernés par l'ensemble des modifications, de la fréquence à laquelle le fichier respectif est modifié ou
une métrique logicielle, telle que le nombre de lignes de source, la densité des commentaires ou la complexité cyclomatique, pertinente pour le code affecté par l'ensemble des modifications.

13. Dispositif de traitement de données comprenant des moyens de mettre en oeuvre la méthode selon l'une des revendications précédentes.

14. Programme d'ordinateur comprenant des instructions qui, lorsque le programme est exécuté par un ordinateur, conduisent celui-ci à mettre en oeuvre la méthode selon l'une des revendications 1 à 12.

15. Signal d'un support de données, portant le programme d'ordinateur selon la revendication 14.
